(19)

Europäisches Patentamt

European Patent Office

Office européen des brevets

(11) **EP 4 044 095 A1**

(12) **EUROPEAN PATENT APPLICATION**

(43) Date of publication:
**17.08.2022 Bulletin 2022/33**

(21) Application number: **22157071.6**

(22) Date of filing: **16.02.2022**

(51) International Patent Classification (IPC):
***G06Q 30/02*** (2012.01)     ***G06N 20/00*** (2019.01)

(52) Cooperative Patent Classification (CPC):
**G06Q 30/0201; G06N 20/00; G06Q 30/0282**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.02.2021 US 202117176271**

(71) Applicant: **RepTrak Holdings, Inc.**
**Boston, MA 02116 (US)**

(72) Inventors:
• **FOMBRUN, Charles**
  **Boston, 02116 (US)**

• **HASELTINE, Mark**
  **Boston, 02116 (US)**
• **LITVAK-HINENZON, Anna**
  **Boston, 02116 (US)**
• **ULF NIELSEN, Kasper**
  **Boston, 02116 (US)**
• **GEORGES TRAD, Nicolas**
  **Boston, 02116 (US)**
• **VAN RIEL, Cees**
  **Boston, 02116 (US)**
• **WRIGHT-FORD, Kylie**
  **Boston, 02116 (US)**

(74) Representative: **Mewburn Ellis LLP**
**Aurora Building**
**Counterslip**
**Bristol BS1 6BX (GB)**

(54) **SYSTEM AND METHOD FOR DETERMINING AND MANAGING REPUTATION OF ENTITIES AND INDUSTRIES**

(57) A system and method for determining and managing reputation of an entity or industry includes cleaning data to derive a highly reliable, demographically representative sample of a survey population, sized to provide a ninety-five percent or greater confidence interval from individuals familiar with the entity; determining a reputation perception score of the entity; determining reputation factor scores; determining reputation driver scores; and determining a reputation driver weight and reputation driver order of importance to entity reputation.

**FIG. 1**

EP 4 044 095 A1

**Description**

**FIELD OF THE INVENTION**

The present invention generally relates to effective determination of entity and industry reputations, and, more particularly, to systems and methods that provide realistic and accurate determination of the ability of an entity to deliver on stakeholder expectations through detailed and individualized market driver assessment, scoring, and weighting.

**BACKGROUND OF THE INVENTION**

It is vital for companies, brands, and corporations to manage their reputation. The reputation of a corporation is a measure of how society views the corporation and provides a good measure of public expectation that the corporation has the basic ability to fulfill the expectations of a current or potential consumer. Reputation of a corporation bears weight on a number of important factors. For example, a strong reputation of a corporation will increase chances of obtaining and maintaining a loyal customer base, resulting in increased sales and being able to charge a premium for items sold. Strong corporate reputation also allows for a stronger current and potential employee pool. A strong reputation also increases chances that a potential purchaser will commit to a purchase, and a potential investor will commit to an investment.

Reputation is especially important in e-commerce, where products are being purchased online and the benefit of face to face encounter and interaction is uncommon. In addition, the e-commerce world removes the personal brick and mortar experience, making interaction during purchasing less personal, thereby making reputation even more important since live interaction cannot be relied upon to entice current and potential customers.

Reputation determination currently is inaccurately measured, using unrealizable data that tends to be biased and self-serving. A more reliable system and method is required to be provided for accurately measuring and managing reputation of entities and industries so as to allow for adjustment to improve reputation, thereby benefitting the entity, as well as enhancing consumer experience.

**SUMMARY OF THE INVENTION**

Embodiments of the present invention provide a system and method for determining and managing entity or industry reputation. Briefly described, the method includes determining a sample size of population that is demographically representative of a desired survey population and which provides at least a ninety-five percent confidence interval, where those within the sample size have a predefined level of familiarity with the entity, and wherein this sample size which provides at least a ninety-five percent confidence interval, and which has the predefined level of familiarity, is referred to herein as a unique group; determining a level of emotional connection of those within the unique group with the entity, referred to herein as a reputation perception score, wherein determining the level of emotional connection comprises the steps of: receiving survey ratings from emotional connection survey questions, where each survey rating is provided by a party within the unique group, and wherein the emotional connection survey questions are categorized into at least one category, where each category focuses on a different emotional connection; converting the received ratings from a raw scale to a zero to one-hundred scale; weighting the received survey ratings to accommodate for at least one of the group consisting of cultural bias and missed demographic quotas; and aggregating the converted received ratings within each category, and averaging the aggregated results within the different categories to provide a single final reputation perception score; determining a level of how those within the unique group practically think about the entity, referred to herein as a reputation factor score, wherein determining the level of how those within the unique group practically think about the entity comprises the steps of: receiving survey ratings from practical thinking survey questions, where each survey ratings is provided by a party within the unique group, and wherein the practical thinking survey questions are each referred to as a factor; converting the received survey ratings from practical thinking survey questions from a raw scale to a zero to one-hundred scale; weighting the received survey ratings from practical thinking survey questions to accommodate for at least one of the group consisting of cultural bias and missed demographic quotas; and aggregating all converted survey ratings received for a single factor to provide an aggregate factor score per factor; and using the single final reputation perception score and the aggregate factor score per factor to provide a reputation of the entity.

In accordance with one exemplary embodiment, the method may also include performing a redundancy analysis on each factor to remove redundant factors; determining to which driver within a set of drivers each factor belongs, where a driver is an area that members of the unique group would tend to care about when assessing the reputation of the entity; and averaging the score of each factor belonging to a driver to provide a reputation driver score for each driver within the set of drivers, resulting is multiple reputation driver scores.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

**BRIEF DESCRIPTION OF THE DRAWINGS**

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principals of the invention.

FIG. 1 is a schematic illustration of a network in which the present system and method may be provided.
FIG. 2 is a schematic diagram further illustrating the reputation server of FIG. 1 in accordance with one exemplary embodiment of the invention.
FIG. 3 is a schematic diagram further illustrating modules within the memory of FIG. 2 that are used to perform functionality of the reputation server in accordance with the present invention.
FIG. 4 is a flowchart exemplifying steps taken in accordance with the present system and method to determining and managing reputations of entities and industries.
FIG. 5 is a flowchart further illustrating steps taken in obtaining the data and cleaning the data.
FIG. 6 is a flowchart further illustrating steps taken in obtaining a reputation perception score.
FIG. 7 is a flowchart illustrating steps taken in deriving the reputation factor score associated with the entity for which reputation is to be measured.
FIG. 8 is a flowchart illustrating steps taken in determining reputation driver scores.

**DETAILED DESCRIPTION**

The present system and method provides a reliable measure of reputation for an entity or industry, and allows for reputation management in a manner that is most efficient, where specific adjustments that would be most effective toward increasing reputation are highlighted so as to provide the entity or industry with guidance for improving reputation. It should be noted that an entity may be any of, but not limited to, a corporation, company, individual, or a group of individuals functioning under one name or label.

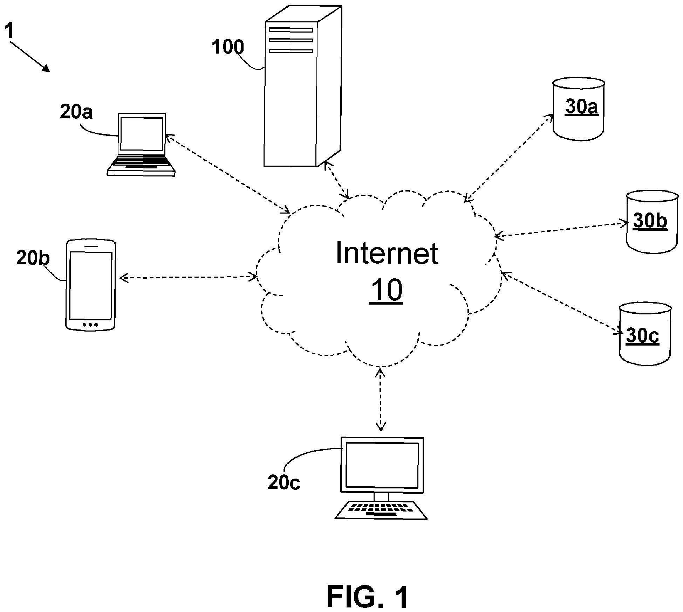

The present system and method may be provided in the network 1 illustrated by the schematic diagram of FIG. 1. A reputation server 100 may contain a reputation engine therein, for defining functionality performed by the present reputation determining and managing system and method, as will be described in detail herein. A consumer interacting with the present system and method can communicate with the reputation server 100 via the internet through use of a user device such as, but not limited to a laptop 20a, a cell phone 20b, or a desktop computer 20c. Such devices 20a-20c allow a user to interact with the reputation server 100 through use of a graphical user interface or other method that will allow a user to sign into the reputation server 100, enter necessary information and retrieve requested information, such as a reputation score, driver scores, and weights of driver scores, through, for example, a web site, or directly through interaction with a software application stored on the user device 20a-20c, or by other means. Information retrieved from and provided to the reputation server 100 will be described in additional detail herein. It should be noted that the user device 20 may be a different device, such as, but not limited to, an i-pad, smart watch, or other device.

As shown by FIG. 1, one or more database 30a-30c may be provided for storing data from and/or providing data to the reputation server 100, as described herein. While three databases are illustrated by FIG. 1, one having ordinary skill in the art will appreciate that fewer or more databases may be provided. It will also be appreciated that such remote storage may be cloud storage or another form of remote storage.

Functionality as performed by the present reputation assessment and management system and method is defined by modules within the reputation server 100. The modules may be provided together as a reputation engine consisting of the modules, or in multiple locations within a single or more than one machine. For example, in hardware, the functionality of the modules can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc. The modules can also be provided as software modules of a reputation engine, where the reputation engine comprises a processor and a memory having software modules therein defining functionality to be performed by the present system and method.

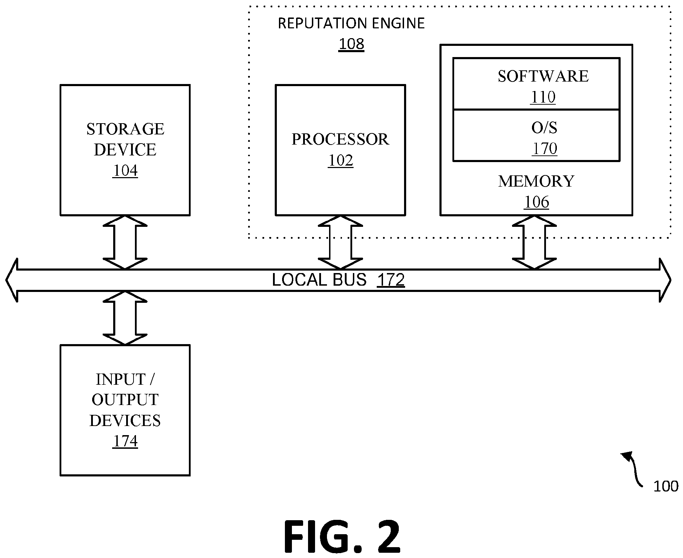

Referring to an embodiment where the reputation engine comprises a memory having software modules therein defining functionality to be performed by the present system and method, as shown by FIG. 2, the reputation server 100 contains a processor 102, a local storage device 104, a memory 106 having software 110 stored therein that defines the reputation engine functionality, input and output (I/O) devices 174 (or peripherals), and a local bus, or local interface 172 allowing for communication within the reputation server 100. The combination of the processor 102 and the memory 106 may also be referred to as the reputation engine 108. The local interface 172 can be, for example but not limited to, one or more buses or other wired or wireless connections, as is known in the art. The local interface 172 may have additional elements, which are omitted for simplicity, such as controllers, buffers (caches), drivers, repeaters, and receivers, to enable communications. Further, the local interface 172 may include address, control, and/or data connections to enable appropriate communications among the aforementioned components.

The processor 102 is a hardware device for executing software, particularly that stored in the memory 106. The processor 102 can be any custom made or commercially available single core or multi-core processor, a central processing unit (CPU), a Graphics processing unit (GPU), an auxiliary processor among several processors associated with the present reputation server 100, a semiconductor-based microprocessor (in the form of a microchip or chip set), a microprocessor, or generally any device for executing software instructions.

The memory 106 can include any one or combination of volatile memory elements (e.g., random access memory (RAM, such as DRAM, SRAM, SDRAM, etc.) and nonvolatile memory elements (e.g., ROM, hard drive, tape, CDROM, etc.). Moreover, the memory 106 may incorporate electronic, magnetic, optical, and/or other types of storage media. Note that the memory 106 can have a distributed architecture, where various components are situated remotely from one another, but can be accessed by the processor 102.

The software 110 defines functionality performed by the reputation 100, in accordance with the present invention. The software 110 in the memory 106 may include one or more separate programs, each of which contains an ordered listing of executable instructions for implementing logical functions of the reputation server 100, as described below. The memory 106 may contain an operating system (O/S) 170. The operating system 170 essentially controls the execution of programs within the reputation server 100 and provides scheduling, input-output control, file and data management, memory management, and communication control and related services.

The I/O devices 174 may include input devices, for example but not limited to, a keyboard, mouse, scanner, microphone, etc. Furthermore, the I/O devices 174 may also include output devices, for example but not limited to, a printer, display, etc. Finally, the I/O devices 174 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the reputation server 100 is in operation, the processor 102 is configured to execute the software 110 stored within the memory 106, to communicate data to and from the memory 106, and to generally control operations of the reputation server 100 pursuant to the software 110.

When the functionality of the reputation server 100 is in operation, the processor 102 is configured to execute the software 110 stored within the memory 106, to communicate data to and from the memory 106, and to generally control operations of the reputation server 100 pursuant to the software 110. The operating system 170 is read by the processor 102, perhaps buffered within the processor 102, and then executed.

When functionality of the reputation server 100 is implemented in software 110, as defined by software modules within the memory 106, as will be described herein, it should be noted that instructions for implementing the reputation server 100 can be stored on any computer-readable medium for use by or in connection with any computer-related device, system, or method. Such a computer-readable medium may, in some embodiments, correspond to either or both the memory 106 or the storage device 104. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 102 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

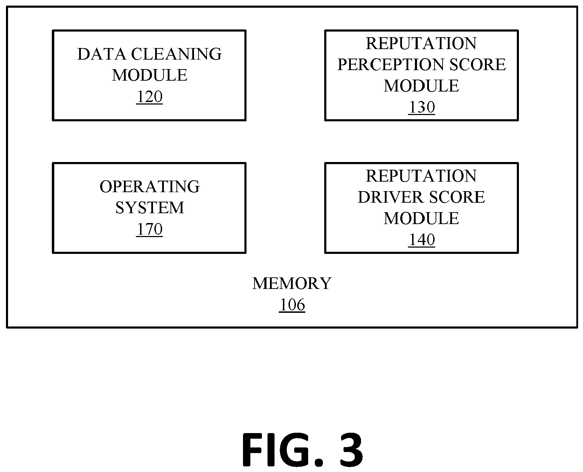

FIG. 3 is a schematic diagram further illustrating modules within the memory 106 of FIG. 2 that are used to perform functionality of the reputation server 100 in accordance with the present invention. As shown by FIG. 3, the reputation server 100 contains a data cleaning module 120, a reputation perception score module 130 and a reputation driver score module 140. These modules work together to provide reputation determination and management as is to be described herein.

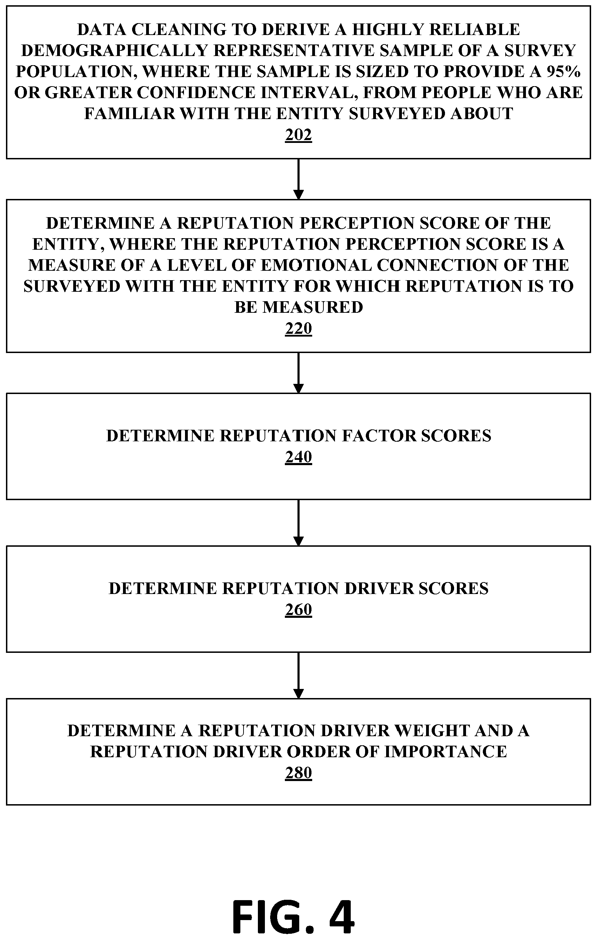

FIG. 4 is a flowchart exemplifying steps taken in accordance with the present system and method to determining and managing reputations of entities and industries. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

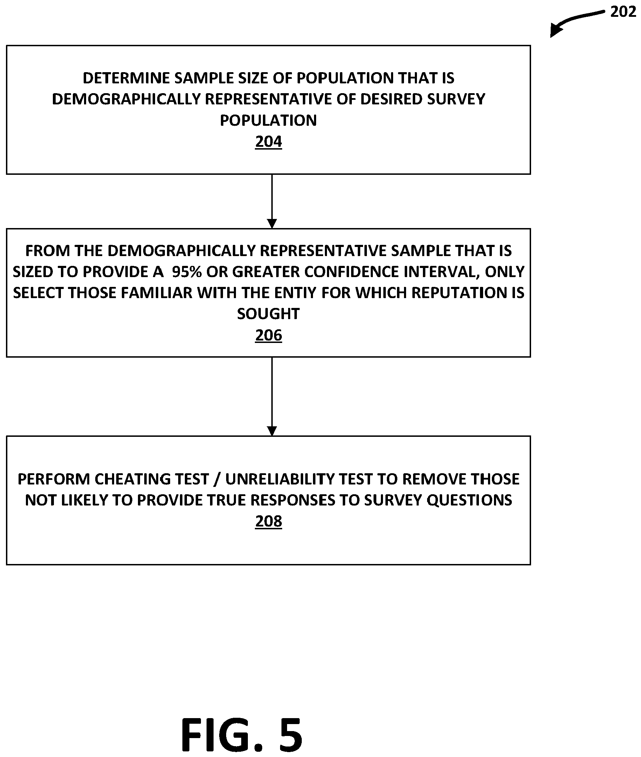

As shown by block 202, data is obtained for determining reputation of an entity and that data is cleaned. FIG. 5 is a flowchart further illustrating steps taken in obtaining the data and cleaning the data. Referring to FIG. 5, the present method begins with the gathering of survey data from an informed general public in a unique manner. Specifically, as shown by block 204 a sample size of individuals necessary for the survey is determined. The sample size of the population that is to be used is to be demographically representative of a desired size of the population for which the survey is sought. For example, if the population to be surveyed comprises forty percent males and sixty percent females, as well as twenty percent aged between fifteen and twenty-one, thirty percent aged between twenty-two and thirty-five, and fifty percent aged between thirty-six and fifty, the sample size for surveying would have the same or extremely close to these percentages so as to have a demographically representative sample group. The size, or number, of individuals surveyed is determined using a known statistical formula, resulting in obtaining a ninety-five percent or better confidence interval. This means that the difference between the survey results of the populations sought, and the survey results of the demographically representative smaller sized survey group is a maximum of around five percent. One having ordinary skill in the art would appreciate that a lower confidence interval may be used, however, it has been determined that a ninety-five percent or better confidence interval is ideal to provide the data beneficial to obtaining highly accurate reputation determination and management. The result of this step is a demographically representative sample that is sized to provide a ninety-five percent or better confidence interval.

As shown by block 206, a determination is then made to ensure that those to be surveyed have a predefined level of familiarity with the entity for which reputation determination is sought. Reputation determination is more accurate when only those with at least the predefined level of familiarity with the entity itself are surveyed. Only respondents that pass a pre-defined threshold of familiarity are considered in the rating. For example, familiarity can be assessed on a scale of one to seven, and only those familiar at level of four and up are considered. From the familiarity score, the present system and method can also provide the entity with an awareness score for their reference and reputation management. The level of familiarity of those to be surveyed may be determined by asking questions that are specific to the entity for which the reputation determination is sought.

Since a surveyed person could potentially lie about their level of familiarity with an entity, a screening for unreliability test, is performed to flush out those likely to lie or exaggerate about their familiarity with an entity associated with the survey questions (block 208). For example, a questionnaire can be sent that lists corporations that do not exist and requesting a familiarity level from the receiver of the survey. If the individual surveyed claims to be familiar with one or more corporation that does not exist, the responder may be considered to be unreliable and they would then be removed from the demographically representative sample that is sized to provide a ninety-five or greater confidence interval.

The previously mentioned data cleaning steps of FIG. 5 result in a highly reliable demographically representative sample of a survey population that is sized to provide a ninety-five percent or greater confidence interval, from people who are familiar with the surveyed entity. It should be noted that while the present description is provided with regard to determining a highly accurate reputation of an entity, this process that is being described herein may instead by applied for a specific product, brand, or even an industry.

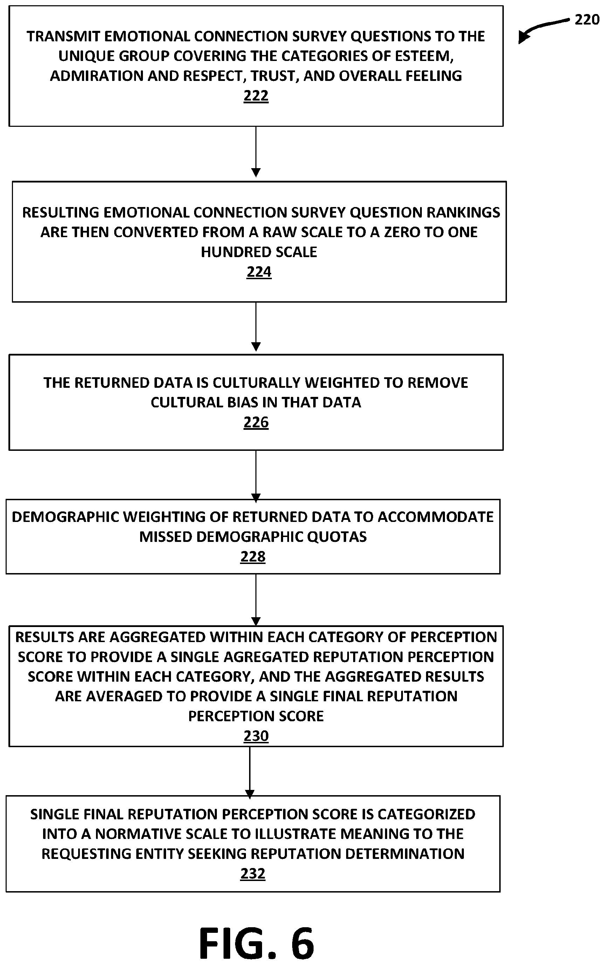

Returning to FIG. 4, after performing the data cleaning step (block 202), the reputation server 100 determines a reputation perception score (block 220). The reputation perception score is a measure of a level of emotional connection of a stakeholder, such as the general public, to be surveyed with the entity for which reputation is to be measured. FIG. 6 is a flowchart further illustrating steps taken in obtaining a reputation perception score.

Referring to FIG. 6, a series of focused, emotional connection survey questions are transmitted to the unique group resulting from the sample determination in the data cleaning step (hereafter, referred to as the "unique group"). The transmitted survey questions measure a level of emotional connection of the unique group with the entity for which reputation is being measured (block 222). It is to be recalled that the unique group is the result of the data cleaning step, so that emotional connection survey answers from the unique group are extremely similar to what would be returned by an entire desired population. More specifically, if a unique group is two thousand individuals, survey results from that unique group would be extremely similar, if not the same as that which would have been received if an entire population of one million people for which the survey was intended, were in fact surveyed.

In accordance with the present invention, the emotional connection survey questions transmitted fall into one of four categories. A first category of survey questions is esteem questions, which are questions intended to determine a level of esteem that the party surveyed associates with the entity to which a reputation measurement is desired. As an example, the survey question may ask a surveyed individual to rate from one to seven whether a company is a company that the surveyed individual gets a good feeling about, with a seven rating representing that a very good feeling is felt by the surveyed individual, and a one ratings representing that a very poor feeling is felt by the surveyed individual.

A second category of survey questions is admiration questions, which are questions intended to determine a level of admiration that the party surveyed associates with the entity to which a reputation measurement is desired. As an example, the survey question may ask a surveyed individual to rate from one to seven whether a company is a company that the surveyed individual admires and respects, with a seven rating being a high level of admiration and respect, and a one rating being a lowest level of admiration and respect.

A third category of survey questions is trust questions, which are questions intended to determine a level of trust that the party surveyed associates with the entity to which a reputation measurement is desired. As an example, the survey question may ask a surveyed individual to rate from one to seven whether a company is a company that the surveyed individual trusts, with a seven rating being a high level of trust, and a one being the lowest level of trust.

A fourth category of survey questions is feeling questions, which are questions intended to determine a level of positive feeling that the party surveyed associates with the entity to which a reputation measurement is desired. As an example, the survey question may ask a surveyed individual to rate from one to seven whether a company is a company that the surveyed individual feels has a good overall reputation, with a seven rating signifying a belief that the company has a very good overall reputation, and a one rating signifying a belief that the company has a very poor overall reputation.

While it is preferred that rating for each category of emotional connection survey be between one and seven, one having ordinary skill in the art would appreciate that a different scale may be used that is smaller than a zero to one-hundred scale. This will be apparent in the following description since a conversion is performed to change from a smaller scale to a zero to one-hundred scale, as described herein.

The result of this step is X number of returned first, second, third, and fourth category survey questions, where X is the number of individuals within the unique group. Therefore, if there are, for example, two-thousand individuals within the unique group (the highly reliable demographically representative sample of a survey population that is sized to provide a ninety-five percent or greater confidence interval, from people who are familiar with the surveyed entity), then assuming that all who received the emotional connection survey questions responded with ratings, there will be two-thousand first category question ratings, two-thousand second category question ratings, two-thousand third category question ratings, and two-thousand fourth category question ratings, also referred to herein as the resulting emotional connection survey question ratings. The resulting emotional connection survey question ratings may be stored within the reputation server 100 storage device 104, or within one of the other databases 30a, 30b, 30c within the network 1.

As shown by block 224, each of the resulting emotional connection survey question ratings returned are then converted by the reputation engine 108 from a raw scale of one to seven, to a zero to one hundred scale, to provide a rescaled score for each of the resulting emotional connection survey question ratings returned. This process may be performed by the reputation perception score module 130 using an equation such as, but not limited to the following equation 1.

$$\text{Rescaled Score} = ((\text{Raw Score}-1) / 6 ) \times 100 \qquad (\text{Eq. 1})$$

The result of this step is X number of esteem reputation perception scores, X number of admiration reputation perception scores, X number of trust reputation perception scores, and X number of feeling reputation perception scores, where X is the number of individuals within the unique group. Each of the reputation perception scores may then be stored within the reputation server 100 storage device 104, or within one of the other databases 30a, 30b, 30c within the network 1.

It has been determined that people in different countries, or geographical regions in general, tend to rate companies higher or lower resulting in an artificial skew in the rating distribution. As a result, and to ensure high accuracy in the final determined reputation of the reputation server 100, the present system and method overcomes this "cultural bias" in the data by standardizing all scores, per respondent, against the aggregate distribution of all scores stored (block 226). A standardization formula is applied in each market to ensure that scores are comparable across different markets, where different weights are applied to specific data based on the specific market. It should be noted that a "market" may be considered a specific geographical region, for example, a country, or a bigger or smaller geographical region. As an example, in Italy, the car brand Ferrari is likely to have an artificially high skew because the car is made in Italy. This would make survey results from those in Italy skewed on the high side. Therefore, the present system and method applies a standardization formula that takes into account a global mean and a global standard deviation across markets, and a country mean and a country standard deviation to normalize that which may have been skewed merely as a product of cultural pride or bias in general. As a result, a lower weight would be applied in Italy for the brand Ferrari than in other markets. Another example where a cultural weighting may be applied is when markets with a tendency to skepticism resulting in general lower opinions about corporations are compared with markets with an optimism tendency resulting in elevated opinions about corporations. In such cases, the cultural weighting removes cultural biases in rating and assures a standardized representation of reputation perceptions across different markets. The standardized formula may include equations 2 and 3 herein.

$$ZScore = \frac{(Rescaled\ Score - Country\ Mean)}{Country\ Standard\ Deviation} \qquad \text{(Eq. 2)}$$

$$Standardized\ Score = (ZScore * Global\ Std.Dev.) + Global\ Mean \quad \text{(Eq. 3)}$$

In equation 2 the country mean is the unweighted average score in the region. Preferably, the country mean is calculated periodically (e.g. every three years) from historical data of raw scores on the respondent level in each country. In addition, the country standard deviation represents the variability of scores among the respondents. Preferably, the country standard deviation is calculated periodically (e.g. every three years) from historical data of raw scores on the respondent level in each country. Preferably, the country mean and country standard deviation should be recalculated for a market, or region, within a predefined time period, for example, but not limited to, every three years, as previously mentioned, although it need not be every three years. This will ensure a high level of accuracy in the determined reputation score of the present system and method.

One having ordinary skill in the art would appreciate that while an example of a "market" has been provided as being a geographical region, a different measurable grouping may be used and the present invention is not intended to be limited to markets only being geographical regions.

During data collection from the unique group it is also beneficial to hit demographically representative quotas. As an example, common demographic groups that are targeted to ensure a market demographic representative sample for surveying may include age and gender. Unfortunately, during data collection it is not always possible to hit target demographic quotas exactly. As an example, a target demographic quota may be sixty percent women and forty percent men, however, a resulting highly reliable demographically representative sample of a survey population that is sized to provide a ninety-five percent or greater confidence interval, from people who are familiar with the surveyed entity (*i.e.*, unique group) may not comprise sixty percent women. In these cases, the reputation perception score module 130 applies a demographic weight to the data collected from the unique group, where the demographic weight is dependent upon the actual unique group itself, so as to ensure that the unique group results are representative of the population targeted (block 228). If the unique group is representative of the population targeted, then no demographic weight is applied.

In accordance with one exemplary embodiment of the invention, a Random Iterative Method (RIM) weighting algorithm may be used to demographically weigh, and therefore match, the returned sample of the unique group, which may have already been culturally weighted, to the demographics of the population to which the study is intended. The algorithm is repeatedly applied to the data until the demographic weight converges. It is noted that a RIM weighting method allows a more precise analysis than a proportional weighting approach, although either method may be used, as well as other weighting methods known to those having ordinary skill in the art.

In accordance with an alternative embodiment of the invention, it should be noted that other weighting of data may be performed to account for other biases, such as, but not limited to, a data sources weighing. This would be beneficial when it is known that a specific data source tends to have a more positively biased or negatively biased audience that is used for surveying. Data source weighting takes this into account and applies a weight based on the source so as to normalize results.

The results after the weighting steps (blocks 226 and 228) are X number of rescaled, from zero to one hundred, emotional connection survey question returned ratings that have been weighted for cultural bias and demographic bias, for each of the categories of esteem reputation perception scores, admiration reputation perception scores, trust reputation perception scores, and feeling reputation perception scores, where X is the number of individuals within the unique group. These results are then aggregated within each category to provide a single aggregated reputation perception score within each of the four categories and a single final reputation perception score is derived from averaging these four (4) scores (block 230). It should be noted that additional or fewer categories may be implemented,

The resulting single final reputation perception score is then categorized into a normative scale, preferably of five categories (block 232), although less or more categories may be used. It is found that the use of five categories is ideal. For example, the five categories may be weak reputation, poor reputation, average reputation, strong reputation, and excellent reputation. Specific ranges of values between the zero to one hundred range for the reputation perception score may be assigned to each of the five categories, for example based on quantiles of a normal distribution, so that the received reputation perception score for an associated entity may have deeper meaning.

The present system and method provide for a great level of granularity of data, in addition to providing the overall single final aggregated reputation perception score, the reputation perception scores within each of the four categories, and the categorization of the single final aggregated reputation perception score into a normative scale. Specifically, it is recalled that the X number of original emotional connection survey question ratings are saved, the X number of rescaled emotional connection survey question ratings are saved, the X number of rescaled emotional connection survey question ratings that have been weighted for cultural and demographic bias for each of the four categories have been saved, the single aggregated reputation perception score within each of the four categories have been saved, the resulting single final reputation perception score has been saved, and the normative scale associated with the single final aggregated reputation perception score has been saved. This level of granularity in the data is very beneficial to the entity for which reputation determination is desired.

Returning to FIG. 4, after the reputation perception score module 130 (FIG. 3) determines the reputation perception score, the reputation driver score module 140 (FIG. 3) determines reputation factor scores (block 240). While the reputation perception score is a measure of a level of emotional connection of the general public to be surveyed with the entity for which reputation is to be measured, the reputation factor score is a measure of what an individual practically thinks about the entity for which reputation is to be measured.

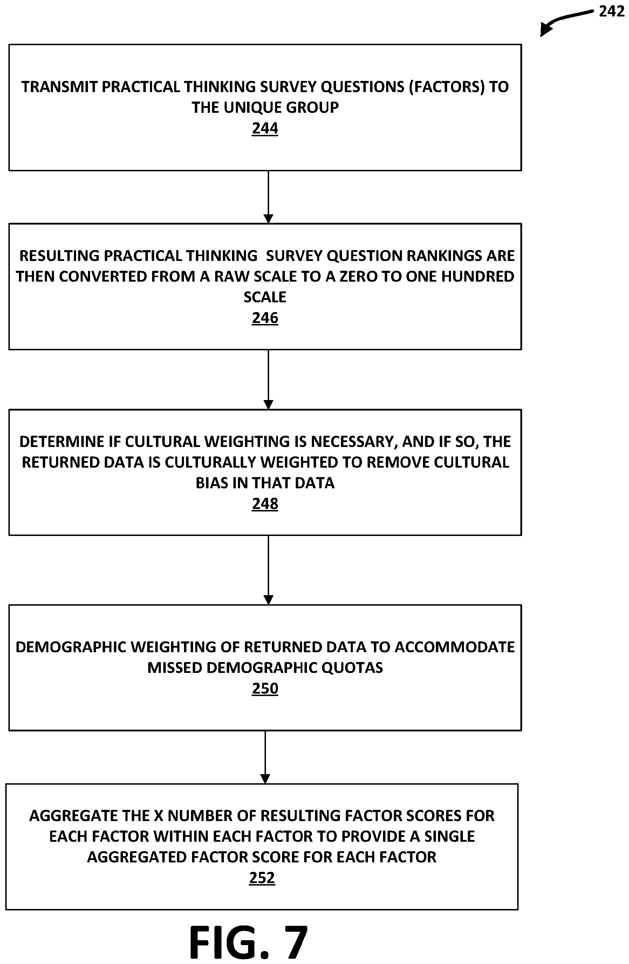

FIG. 7 is a flowchart 242 illustrating steps taken in deriving the reputation factor score associated with the entity for which reputation is to be measured. As shown by block 244, a second series of focused survey questions, this time being practical thinking survey questions, are transmitted to the unique group resulting from the data cleaning step. Each practical thinking survey question is also referred to as a factor. The transmitted practical thinking survey questions measure a level of practical thinking connection of the unique group with the company for which reputation is being measured. This may also be considered as the rational connection or the opinion of the respondent on each of the topics of the operations of the entity. It is to be recalled that the unique group is the result of the data cleaning step, so that practical thinking survey answers from the unique group are extremely similar to what would be returned by an entire desired population. More specifically, if a unique group is two thousand individuals, survey results from that unique group would be extremely similar, if not the same as that which would have been received if an entire population of one million people for which the survey was intended, were in fact surveyed.

Preferably there are more than twenty survey questions with the second set of focused survey questions. It is noted, however, that there may be more or fewer such survey questions within the set of practical thinking survey questions, depending upon a level of granularity needed to address aspects of drivers desired.

In accordance with the present invention, the second set practical thinking survey questions transmitted fall into one of seven categories. These categories are referred to herein as reputation drivers. Specifically, it was found that there are typically seven areas that people tend to care about when assessing the reputation of an entity. Those areas are referred to herein as reputation drivers, and include, for example, products and services, innovation, workplace, governance, citizenship, leadership, and performance.

The first reputation driver is Products & Services, which provides a perception of the general public on the quality and value of the entity's offerings and customer care. As an example, the survey question may ask a surveyed individual to rate from one to seven whether the entity offers high quality products and services, with a seven rating representing strong agreement, and a one rating representing strong disagreement felt by the surveyed individual.

The second reputation driver is Innovation, which addresses the perception of the company being innovative in its offerings, first to market and adaptable to change. As an example, the survey question may ask a surveyed individual to rate from one to seven whether the entity is an innovative company, with a seven rating representing strong agreement that the entity is an innovative company, and a one rating representing strong disagreement felt by the surveyed individual.

The third reputation driver is Workplace, which addresses the wellbeing of employees, Diversity, Equity and Inclusion, and workplace satisfaction. As an example, the survey question may ask a surveyed individual to rate from one to seven whether the entity offers equal opportunity in the workplace, with a seven rating representing strong agreement that the entity does offer equal opportunity in the workplace, and a one rating representing strong disagreement felt by the surveyed individual.

The fourth reputation driver is Governance, which addresses ethics, transparency and corporate responsibility. As an example, the survey question may ask a surveyed individual to rate from one to seven whether the entity is fair in the way it does business, with a seven rating representing strong agreement that the entity is fair in the way it does business, and a one rating representing strong disagreement felt by the surveyed individual.

The fifth reputation driver is Citizenship, which addresses the company's contribution to making the world better by supporting good causes and contributing to the community. As an example, the survey question may ask a surveyed individual to rate from one to seven whether the entity supports good causes, with a seven rating representing strong agreement that the entity does support good causes, and a one rating representing strong disagreement felt by the surveyed individual.

The sixth reputation driver is Leadership, which represents perceptions on entity's leadership and clear direction. As an example, the survey question may ask a surveyed individual to rate from one to seven whether the entity has excellent managers, with a seven rating representing strong agreement that the entity does have excellent managers, and a one rating representing strong disagreement felt by the surveyed individual.

The seventh reputation driver is Performance, which addresses the financial performance of an entity and future growth prospects. As an example, the survey question may ask a surveyed individual to rate from one to seven whether the entity is a profitable company, with a seven rating representing strong agreement that the entity is a profitable company, and a one rating representing strong disagreement felt by the surveyed individual.

While it is preferred that the answered rating for each practical thinking survey question be between one and seven, one having ordinary skill in the art would appreciate that a different scale may be used that is smaller than a zero to one-hundred scale. This will be apparent in the following description since a conversion is performed to change from a smaller scale to a zero to one-hundred scale, as described herein.

The result of this step is X number of returned responses for each practical thinking survey question or factor, where X is the number of individuals within the unique group. Therefore, if there are two-thousand individuals within the unique group (the highly reliable demographically representative sample of a survey population that is sized to provide a ninety-five percent or greater confidence interval, from people who are familiar with the surveyed entity), then assuming that all who received the practical thinking survey questions responded with ratings, there will be two-thousand responses for each practical thinking survey question, also referred to herein as the resulting practical thinking survey question rating. The resulting practical thinking survey question ratings may be stored within the reputation server 100 storage device 104, or within one of the other databases 30a, 30b, 30c within the network 1.

As shown by block 246, each of the resulting practical thinking survey question ratings returned are then converted by the reputation engine 108 from a raw scale of one to seven, to a zero to one hundred scale, to provide a rescaled score for each of the resulting practical thinking survey question rating returned. This process may be performed by using an equation such as, but not limited to, the previously mentioned equation 1.

The result of this step is X number of factor scores for each practical thinking survey question, where X is the number of individuals within the unique group. Each of the factor scores may then be stored within the reputation server 100 storage device 104, or within one of the other databases 30a, 30b, 30c within the network 1.

To ensure high accuracy in the final determined reputation of the reputation server 100, the present system and method overcomes "cultural bias" in the data by standardizing all factor scores against the aggregate distribution of all factor scores stored (block 248). A standardization formula is applied in each market to ensure that factor scores are comparable across different markets, where different weights are applied to specific data based on the specific market. As previously mentioned, it should be noted that a "market" may be considered a specific geographical region, for example, a country, or a smaller geographical region. The standardization formula takes into account a country mean and a country standard deviation to normalize that which may have been skewed merely as a product of cultural pride or bias in general. The standardized formula may include the previously mentioned equations 2 and 3. Preferably, the country mean and country standard deviation should be recalculated for a market, or region, within a predefined time period, for example, but not limited to, every three years. This will ensure a high level of accuracy in the determined factor score of the present system and method.

As previously mentioned, during data collection from the unique group it is also beneficial to hit demographically representative quotas. As an example, common demographic groups that are targeted to ensure a market demographic representative sample for surveying may include age and gender. Unfortunately, during data collection it is not always possible to hit target demographic quotas exactly. As an example, a target demographic quota may be sixty percent women and forty percent men, however, a resulting highly reliable demographically representative sample of a survey population that is sized to provide a ninety-five percent or greater confidence interval, from people who are familiar with the surveyed entity (*i.e.*, unique group) may not comprise sixty percent women. In these cases, the reputation driver score module 140 applies a demographic weight to the data collected from the unique group, where the demographic weight is dependent upon the actual unique group itself, so as to ensure that the unique group results are representative of the population targeted (block 250). If the unique group is representative of the population targeted, then no demographic weight is applied.

Also as previously mentioned, in accordance with one exemplary embodiment of the invention, a RIM weighting algorithm may be used to demographically weigh, and therefore match, the returned sample of the unique group, which may have already been culturally weighted, to the demographics of the population to which the study is intended. The algorithm is repeatedly applied to the data until the demographic weight converges. It is noted that a RIM weighting method allows a more precise analysis than a proportional weighting approach, although either method may be used, as well as other weighting methods known to those having ordinary skill in the art.

In accordance with an alternative embodiment of the invention, it should be noted that other weighting of data may be performed to account for other biases, such as, but not limited to, a data sources weighing. This would be beneficial when it is known that a specific data source tends to have a more positively biased or negatively biased audience that is used for surveying. Data source weighting takes this into account and applies a weight based on the source so as to normalize results.

The results after the weighting steps (blocks 248 and 250) are X number of rescaled, from zero to one hundred, practical thinking survey question returned ratings that have been weighted for cultural bias and demographic bias, for each of the factors, where X is the number of individuals within the unique group. These results are also referred to herein as weighted factor scores. The X number of resulting weighted factor scores for each factor are then aggregated within each factor to provide a single aggregated factor score for each factor (block 252). The result is one resulting reputation factor score for each factor.

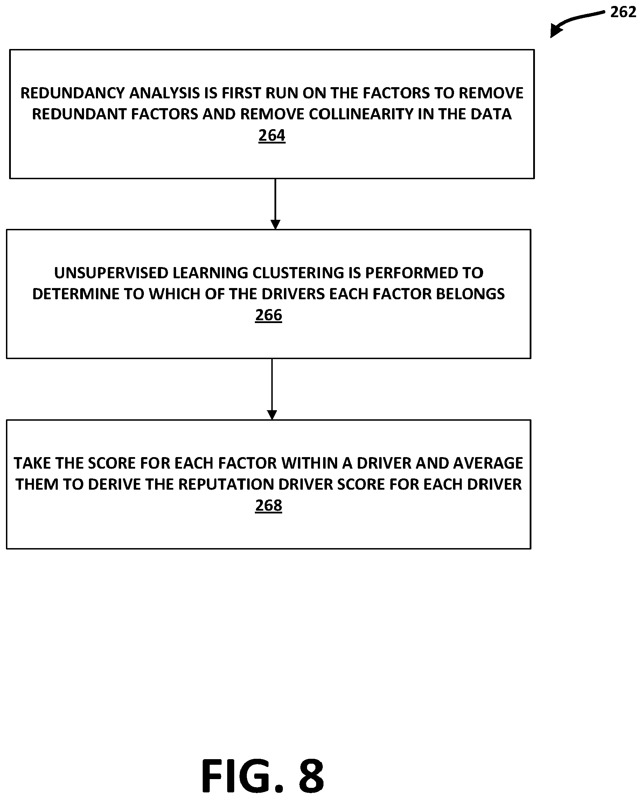

Returning to FIG. 4, after determining the resulting reputation factor scores the reputation driver score module 140 (FIG. 3) determines reputation driver scores (block 260). FIG. 8 is a flowchart 262 illustrating steps taken in determining reputation driver scores.

Referring to FIG. 8, as shown by block 264, redundancy analysis is first run on the resulting reputation factor scores to remove redundant factors and remove collinearity in the data. Specifically, it may be the case that in answering the practical thinking survey questions, surveyed parties may consider two or more of the practical thinking survey questions to be the same. As one having ordinary skill in the art would appreciate, this could skew resulting data, and therefore, make the resulting derived reputation and guidance regarding reputation of the entity less accurate. It is also noted that it may simply be desirable to decrease the number of survey questions asked. Knowing that there is redundancy in projected response would allow for removal of one or more questions. Therefore, such redundant factors should be removed, as well as associated collinearity in the data. To do so, the redundancy analysis (RDA) is run on the factor scores. As part of this process the factors are projected onto linearly independent unique components. This may result in less factors than originally used. A redundancy analysis may be considered as an extension of the multiple linear regression method (MLR) that accounts for multiple response / multiple explanatory input variables and is considered a common method in multivariate statistics. RDA may be performed, for example, by a dimensionality reduction method such as correspondence analysis (CA), discriminant analysis (DA), a canonical version of the principal component analysis (PCA), or non-metric multidimensional scaling (NMDS). Since one having ordinary skill in the art would know how to perform redundancy analysis (RDA), further description is not provided herein.

Unsupervised learning clustering is then used by the reputation driver score module 140 (FIG. 3) to determine to which of the drivers each factor belongs, thereby dividing each of the remaining factors after the redundancy analysis step into one of the drivers (block 266). The process of clustering the reputation factors with unsupervised machine learning into the reputation drivers may be performed by using, for example, principal component analysis (PCA), where the number of components is the number of drivers (7) and the result is the number of factors per each of the drivers (7). PCA is just an example of an unsupervised learning clustering method that may be used in such an implementation, but not limited to, and other clustering methods such as hierarchical clustering, K-Means, or other, may also be used. The result of the unsupervised learning clustering is the number of remaining factors broken into each one of the drivers, therefore, each driver will have a series of factors assigned thereto. For example, if there were twenty factors and seven drivers, the twenty factors are broken into the seven drivers so that each factor is uniquely assigned to a driver, resulting in, for example, a first driver having three factors, a second driver having two factors, a third driver having four factors, and so on.

To determine reputation driver scores the reputation driver score module 140 (FIG. 3) takes the scores of factors assigned to a single driver and averages them to result in a reputation driver score for that driver (block 268). As an example, if a first driver contains factors two, five, and seven, and the factor two score is seventy, the factor five score is eighty, and the factor seven score is ninety, the first reputation driver score is eighty. This process is repeated for all drivers to derive reputation driver scores. The clustering of the factors into drivers may be applied periodically, for example but not limited to once a year, to determine the optimal number of factors per each of the seven drivers. The resulting model structure of the reputation drivers, with certain factors assigned to each of the seven drivers, may be saved and used for calculation of driver scores from factor scores in the interim shorter time periods, for example monthly, or weekly.

As a result of this step, the reputation server 100 now contains the previously determined reputation score, the multiple resulting factor scores, and the reputation driver scores. Returning to FIG. 4, a relationship is sought between these three main bodies of data so as to determine a driver weight and a driver order of importance which will be beneficial to the entity seeking the reputation score (block 280). Specifically, an entity seeking a determination of their reputation is seeking to be able to manage their reputation and have as high a reputation as possible. The present system and method determines weights for each of the reputation drivers and order of importance to maximizing reputation of the entity.

To determine the driver weights, the driver score module 140 uses a supervised machine learning regression module, such as, but not limited to, linear regression, multivariate linear regression, random forest, or gradient boosting, to predict the reputation score from the driver scores, where for the dependent variable, which is the variable we are seeking to predict, the reputation score is used, and for the input variable the driver scores are used. The result is the weight for each of the drivers, which allows for determining importance based on values of the weights. Specifically, a lower determined weight for a driver demonstrates that the specific driver is less important to the overall reputation of the entity. This allows the entity to determine which drivers are most important to increasing reputation of the entity. For ease of use, the resulting driver weights may be normalized so that each weight is a specific percentage of a total of one hundred. For example, out of seven weights, a first weight may be five percent, a second weight twenty percent, a third weight ten percent, a fourth weight thirty percent, a fifth weight five percent, and sixth weight eight percent, and a seventh weight twenty two percent. This would demonstrate that the fourth weight is the most important to the overall reputation of the entity, and therefore, the most value would be gained by the entity with investing time and effort into the fourth weight.

A similar weighting process as described above may be performed for weighting the reputation factors within each driver to derive for the entity a more granular level of insights on their reputation management.

A resulting report for an entity seeking its determined reputation and seeking to manage its reputation could include, per period of time, its overall reputation score and a list of the drivers and associated importance weights so as to provide guidance on which areas to invest additional time and money for maximum increase in reputation. Additional data may also be provided, such as, but not limited to, the factors scores and weights, benchmarking to competitors, industry classification, benchmarking to industry, touch-points between the stakeholder and the entity, media data and scores, ESG (environmental, social, and governance) perception scores, and various business outcomes scores.

## Claims

1.    A method for determining reputation of an entity, comprising the steps of:

determining a sample size of population that is demographically representative of a desired survey population and which provides at least a ninety-five percent confidence interval, where those within the sample size have a predefined level of familiarity with the entity, and wherein this sample size which provides at least a ninety-five percent confidence interval, and which has the predefined level of familiarity, is referred to herein as a unique group;

determining a level of emotional connection of those within the unique group with the entity, referred to herein as a reputation perception score, wherein determining the level of emotional connection comprises the steps of:

receiving survey ratings from emotional connection survey questions, where each survey rating is provided by a party within the unique group, and wherein the emotional connection survey questions are categorized into at least one category, where each category focuses on a different emotional connection;

converting the received rating from a raw scale to a zero to one-hundred scale;

weighting the received survey ratings to accommodate for at least one of the group consisting of cultural bias and missed demographic quotas; and

aggregating the converted received ratings within each category, and averaging the aggregated results within the different categories to provide a single final reputation perception score;

determining a level of how those within the unique group practically think about the entity, referred to herein as a reputation factor score, wherein determining the level of how those within the unique group practically think about the entity comprises the steps of:

receiving survey ratings from practical thinking survey questions, where each survey rating is provided by a party within the unique group, and wherein the practical thinking survey questions are each referred to as a factor;

converting the received survey ratings from practical thinking survey questions from a raw scale to a zero to one-hundred scale;

weighting the received survey ratings from practical thinking survey questions to accommodate for at least one of the group consisting of cultural bias and missed demographic quotas; and

aggregating all converted survey ratings received for a single factor to provide an aggregate factor score per factor; and

using the single final reputation perception score and the aggregate factor score per factor to provide a reputation of the entity.

2. The method of claim 1, further comprising the step of removing from the sample size those not likely to provide true responses to survey questions.

3. The method of claim 1, wherein the categories of emotional connection survey questions are categorized into more than one of the categories consisting of questions that determine a level of esteem that a party within the unique group who is surveyed associates with the entity to which a reputation measurement is desired, questions that determine a level of admiration that a party within the unique group who is surveyed associates with the entity to which a reputation measurement is desired, questions that determine a level of trust that a party within the unique group who is surveyed associates with the entity to which a reputation measurement is desired, and questions that determine a level of positive feeling that a party within the unique group who is surveyed associates with the entity to which a reputation measurement is desired.

4. The method of claim 1, further comprising the step of categorizing the single final reputation perception score into a nominative scale to illustrate meaning to the entity for which reputation is being determined.

5. The method of claim 1, wherein the step of using the single final reputation perception score and the aggregate factor score per factor to provide the reputation of the entity, further comprises the steps of:

   performing a redundancy analysis on each factor to remove redundant factors;
   determining to which driver within a set of drivers each factor belongs, where a driver is an area that members of the unique group would tend to care about when assessing the reputation of the entity; and
   averaging the score of each factor belonging to a driver to provide a reputation driver score for each driver within the set of drivers, resulting is multiple reputation driver scores.

6. The method of claim 5, wherein the set of drivers includes products and services, innovation, workplace, governance (also called conduct), citizenship, leadership, and performance.

7. The method of claim 5 wherein the step of determining to which driver within a set of drivers each factor belongs is performed using unsupervised learning clustering.

8. The method of claim 5, further comprising the steps of determining a reputation driver weight and determining a reputation driver order of importance to increasing reputation of the entity.

9. The method of claim 8, wherein the step of determining reputation driver weight further comprises using a supervised machine learning regression module to predict the reputation score from the reputation driver scores, where for a dependent variable, the reputation score is used, and for an input variable the driver scores are used.

10. The method of claim 9, wherein the supervised machine learning regression module is selected from the group consisting of linear regression, multivariate linear regression, random forest, and gradient boosting.

11. The method of claim 5, further comprising providing the entity seeking its reputation with a report per period of time, containing its overall reputation score and a list of the drivers and associated weights so as to provide guidance on which areas to invest additional time and money for maximum increase in reputation.

12. The method of claim 5, further comprising providing the entity seeking its reputation with a report of overall reputation score of a different entity and a list of the drivers and associated weights of the different entity, for comparison purposes.

13. The method of claim 9, further comprising providing the entity seeking its reputation with the predicted reputation score provided by using the supervised machine learning regression module.

14. The method of claim 1, further comprising providing the entity with the single factor score per each factor to provide a granular representation view of reputation of the entity.

15. The method of claim 5, further comprising providing the entity seeking its reputation with a report per period of time, containing its overall reputation score and a list of the factors and associated importance weights so as to provide guidance on which areas to invest additional time and money for maximum increase in reputation.

**FIG. 1**

REPUTATION ENGINE
108

SOFTWARE
110

O/S
170

MEMORY
106

PROCESSOR
102

STORAGE
DEVICE
104

LOCAL BUS  172

INPUT /
OUTPUT
DEVICES
174

100

# FIG. 2

| DATA CLEANING MODULE 120 | REPUTATION PERCEPTION SCORE MODULE 130 |
|---|---|
| OPERATING SYSTEM 170 | REPUTATION DRIVER SCORE MODULE 140 |

MEMORY
106

# FIG. 3

DATA CLEANING TO DERIVE A HIGHLY RELIABLE DEMOGRAPHICALLY REPRESENTATIVE SAMPLE OF A SURVEY POPULATION, WHERE THE SAMPLE IS SIZED TO PROVIDE A 95% OR GREATER CONFIDENCE INTERVAL, FROM PEOPLE WHO ARE FAMILIAR WITH THE ENTITY SURVEYED ABOUT
202

DETERMINE A REPUTATION PERCEPTION SCORE OF THE ENTITY, WHERE THE REPUTATION PERCEPTION SCORE IS A MEASURE OF A LEVEL OF EMOTIONAL CONNECTION OF THE SURVEYED WITH THE ENTITY FOR WHICH REPUTATION IS TO BE MEASURED
220

DETERMINE REPUTATION FACTOR SCORES
240

DETERMINE REPUTATION DRIVER SCORES
260

DETERMINE A REPUTATION DRIVER WEIGHT AND A REPUTATION DRIVER ORDER OF IMPORTANCE
280

# FIG. 4

202

DETERMINE SAMPLE SIZE OF POPULATION THAT IS
DEMOGRAPHICALLY REPRESENTATIVE OF DESIRED SURVEY
POPULATION
204

FROM THE DEMOGRAPHICALLY REPRESENTATIVE SAMPLE THAT IS
SIZED TO PROVIDE A 95% OR GREATER CONFIDENCE INTERVAL, ONLY
SELECT THOSE FAMILIAR WITH THE ENTIY FOR WHICH REPUTATION IS
SOUGHT
206

PERFORM CHEATING TEST / UNRELIABILITY TEST TO REMOVE THOSE
NOT LIKELY TO PROVIDE TRUE RESPONSES TO SURVEY QUESTIONS
208

# FIG. 5

TRANSMIT EMOTIONAL CONNECTION SURVEY QUESTIONS TO THE UNIQUE GROUP COVERING THE CATEGORIES OF ESTEEM, ADMIRATION AND RESPECT, TRUST, AND OVERALL FEELING
222

RESULTING EMOTIONAL CONNECTION SURVEY QUESTION RANKINGS ARE THEN CONVERTED FROM A RAW SCALE TO A ZERO TO ONE HUNDRED SCALE
224

THE RETURNED DATA IS CULTURALLY WEIGHTED TO REMOVE CULTURAL BIAS IN THAT DATA
226

DEMOGRAPHIC WEIGHTING OF RETURNED DATA TO ACCOMMODATE MISSED DEMOGRAPHIC QUOTAS
228

RESULTS ARE AGGREGATED WITHIN EACH CATEGORY OF PERCEPTION SCORE TO PROVIDE A SINGLE AGREGATED REPUTATION PERCEPTION SCORE WITHIN EACH CATEGORY, AND THE AGGREGATED RESULTS ARE AVERAGED TO PROVIDE A SINGLE FINAL REPUTATION PERCEPTION SCORE
230

SINGLE FINAL REPUTATION PERCEPTION SCORE IS CATEGORIZED INTO A NORMATIVE SCALE TO ILLUSTRATE MEANING TO THE REQUESTING ENTITY SEEKING REPUTATION DETERMINATION
232

220

# FIG. 6

242

```
┌─────────────────────────────────────────────────┐
│  TRANSMIT PRACTICAL THINKING SURVEY QUESTIONS     │
│        (FACTORS) TO THE UNIQUE GROUP              │
│                     244                          │
└─────────────────────────────────────────────────┘
                        │
                        ▼
┌─────────────────────────────────────────────────┐
│  RESULTING PRACTICAL THINKING SURVEY QUESTION     │
│  RANKINGS ARE THEN CONVERTED FROM A RAW SCALE     │
│      TO A ZERO TO ONE HUNDRED SCALE              │
│                     246                          │
└─────────────────────────────────────────────────┘
                        │
                        ▼
┌─────────────────────────────────────────────────┐
│  DETERMINE IF CULTURAL WEIGHTING IS NECESSARY,    │
│  AND IF SO, THE RETURNED DATA IS CULTURALLY       │
│  WEIGHTED TO REMOVE CULTURAL BIAS IN THAT DATA    │
│                     248                          │
└─────────────────────────────────────────────────┘
                        │
                        ▼
┌─────────────────────────────────────────────────┐
│  DEMOGRAPHIC WEIGHTING OF RETURNED DATA TO        │
│  ACCOMMODATE MISSED DEMOGRAPHIC QUOTAS            │
│                     250                          │
└─────────────────────────────────────────────────┘
                        │
                        ▼
┌─────────────────────────────────────────────────┐
│  AGGREGATE THE X NUMBER OF RESULTING FACTOR       │
│  SCORES FOR EACH FACTOR WITHIN EACH FACTOR TO     │
│  PROVIDE A SINGLE AGGREGATED FACTOR SCORE FOR     │
│               EACH FACTOR                         │
│                     252                          │
└─────────────────────────────────────────────────┘
```

# FIG. 7

262

REDUNDANCY ANALYSIS IS FIRST RUN ON THE FACTORS TO REMOVE
REDUNDANT FACTORS AND REMOVE COLLINEARITY IN THE DATA
264

UNSUPERVISED LEARNING CLUSTERING IS PERFORMED TO
DETERMINE TO WHICH OF THE DRIVERS EACH FACTOR BELONGS
266

TAKE THE SCORE FOR EACH FACTOR WITHIN A DRIVER AND AVERAGE
THEM TO DERIVE THE REPUTATION DRIVER SCORE FOR EACH DRIVER
268

# FIG. 8

Europäisches
Patentamt

European
Patent Office

Office européen
des brevets

# EUROPEAN SEARCH REPORT

Application Number

**EP 22 15 7071**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/286676 A1 (FATZINGER LEIGH [US]) 19 September 2019 (2019-09-19) * paragraph [0020] – paragraph [0072] * * figures 1-11 * ----- | 1-15 | INV. G06Q30/02 G06N20/00 |
| X | US 2020/074294 A1 (LONG RYAN [US] ET AL) 5 March 2020 (2020-03-05) * paragraph [0024] – paragraph [0179] * * figures * ----- | 1-15 | |

TECHNICAL FIELDS
SEARCHED      (IPC)

G06Q
G06N

The present search report has been drawn up for all claims

| Place of search | Date of completion of the search | Examiner |
|---|---|---|
| The Hague | 16 June 2022 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 7071

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2022

| Patent document cited in search report | Publication date | Patent family member(s) | Publication date |
|---|---|---|---|
| US 2019286676 A1 | 19-09-2019 | US 2019286676 A1<br>WO 2019178582 A1 | 19-09-2019<br>19-09-2019 |
| US 2020074294 A1 | 05-03-2020 | NONE | |

For more details about this annex : see Official Journal of the European Patent Office, No. 12/82

EPO FORM P0459